# EUROPEAN PATENT APPLICATION

(11) **EP 2 578 662 A1**
(43) Date of publication of application: **10.04.2013**
(21) Application number: 10852346.5
(22) Date of filing: 31.05.2010
(51) Int. Cl.: C09K 11/54, C09K 11/78

(54) **A RARE EARTH ELEMENTS DOPING ON YTTRIUM OXIDE LUMINESCENT THIN FILM CONTAINING CONDUCTIVE OXIDES AND PREPARATION METHODS THEREOF**

(71) Applicant: Ocean's King Lighting Science&Technology Co., Ltd., Guangdong 518054 (CN)
(72) Inventor: ZHOU, Mingjie, Guangdong 518054 (CN); LU, Ting, Guangdong 518054 (CN); MA, Wenbo, Guangdong 518054 (CN)
(74) Representative: Johnson, Richard Alan
(86) International application number: PCT/CN2010/073400
(87) International publication number: WO 2011/150547

(57) **Abstract**

A rare earth elements doping on yttrium oxide luminescent thin film containing conductive oxides and preparation methods thereof are provided. The said luminescent thin film is consisted of Y₂O₃: Re, Zn₁₋ₓAlₓO, wherein 0 < x≤0.05, Re=Eu or Tb. The said methods include the following steps: step 1, preparing colloid of Y and Eu or colloid of Y and Tb; step 2, preparing colloid of Zn₁₋ₓAlₓO; step 3, mixing the colloid in step 1 and the colloid in step 2 to form complex colloid; step 4, coating the complex colloid in step 3 to form the luminescent thin film. The said luminescent thin film increases the conductivity and luminescent property of yttrium oxide luminescent thin film in the art.

## Description

### FIELD OF THE INVENTION

The present invention relates to luminescent material of high luminance and preparation methods thereof, more particularly, to a rare earth elements doping on yttrium oxide luminescent thin film containing conductive oxides and preparation methods thereof.

### BACKGROUND OF THE INVENTION

In recent years, lighting technology and display technology are getting extensive development and application in people's work and life, luminescent material having high efficiency and long life has become more and more important. At present, the usual fluorescent material are oxide and oxysulfide powder activated by zinc sulfide and rare earth ions. As for sulfide phosphor, the emitting luminosity is higher and it has certain conductivity while it is apt to decompose under the large electron beam bombardment, and lower the luminous efficiency of phosphor. Oxide phosphor is of good stability, but the emitting efficiency is not high enough under the electron beam bombardment at low pressure. Also, materials are all insulators and the performance is remained to be improved and enhanced. Meanwhile, the flat coating process of fluorescent powder is uneasily controlled, and the adhesion of it to substrate is not satisfying enough, which has a direct impact on its efficiency in the use and life. Y₂O₃: Re is widely used fluorescent powder, how to make it into thin film, and to endow the prepared thin film with good uniformity, stability and adhesion to substrate, is the main research of rare earth luminescent materials in the field of materials chemistry and materials physics.

The present invention aims at solving the technical problem of proving a rare earth elements doping on yttrium oxide luminescent thin film containing conductive oxides, which is of high luminance and good stability, and preparation methods thereof.

### SUMMARY OF THE INVENTION

The technical solution to solve the technical problem of the present invention is: to provide a rare earth elements doping on yttrium oxide luminescent thin film containing conductive oxides, wherein said yttrium oxide luminescent thin film has the chemical composition formula of Y₂O₃: Re, Zn₁₋ₓAlₓO, wherein 0 < x≤0.05, Re is rare earth element europium or terbium.

And, a preparation method of rare earth elements doping on yttrium oxide luminescent thin film containing conductive oxides, comprising:

step 1: preparing colloid containing rare earth element yttrium and europium or colloid containing rare earth element yttrium and terbium;

step 2: preparing colloid of conductive oxide Zn₁₋ₓAlₓO;

step 3: mixing the colloid obtained in step 1 and the colloid obtained in step 2 to form blended colloid;

step 4: coating the blended colloid obtained in step 3 to form rare earth elements doping on yttrium oxide luminescent thin film containing conductive oxide Zn₁₋ₓAlₓO.

In the preparation method of the present invention, in said step 1, providing yttrium compound and europium compound to prepare solution of yttrium and europium doped with 0.1 % to 10% of europium, the concentration of the solution is in the range of 0.1mol/L to 2.00mol/L; then adding mixed solution of alcohol and water containing citric acid to prepare alcohol-water solution of yttrium and europium, where the volume ratio of water to ethanol is in the range of 1:1 to 1:7, the concentration of the alcohol-water solution is in the range of 0.1mol/L to 1.00mol/L; the molar ratio of citric acid to yttrium ions and europium ions is maintained in the range of 1:1 to 5: 1; then adding polyethylene glycol into alcohol-water solution, making the concentration of polyethylene glycol be in the range of 0.05 to 0.20mg/L; stirring the prepared alcohol-water solution of yttrium and europium in a water bath under the temperature ranged from 40°C to 60°C for 4 to 6h, then ageing in a oven under the temperature ranged from 60°C to 90°C for 40 to 60h to obtain colloid containing yttrium and europium; or
providing yttrium compound and terbium compound to prepare solution of yttrium and terbium doped with 0.1% to 10% of terbium, the concentration of the solution is in the range of 0.1mol/L to 2.00mol/L; then adding mixed solution of alcohol and water containing citric acid to prepare alcohol-water solution of yttrium and terbium where the volume ratio of water to ethanol is in the range of 1:1 to 1:7, the concentration of the alcohol-water solution is in the range of 0.1mol/L to 1.00mol/L; the molar ratio of citric acid to yttrium ions and terbium ions is maintained in the range of 1:1 to 5:1; then adding polyethylene glycol into alcohol-water solution, making the concentration of polyethylene glycol be in the range of 0.05 to 0.20mg/L; stirring the prepared alcohol-water solution of yttrium and terbium in a water bath under the temperature ranged from 40°C to 60°C for 4 to 6h, then ageing in a oven under the temperature ranged from 60°C to 90°C for 40 to 60h to obtain colloid containing yttrium and terbium. Said yttrium compound and europium compound or yttrium compound and terbium compound are selected from nitrates and soluble hydrochloride, and dissolved by deionized water in container to form solution. Said yttrium compound and europium compound or yttrium compound and terbium compound are selected from metal oxides and oxalates, stirring in the temperature range of 15°C to 100°C, said oxides or oxalates are dissolved by pure nitric acid in container to form solution.

In said step 2, the method of making conductive oxide Zn₁₋ₓAlₓO comprises: separately weighing zinc salt and aluminum salt according to the chemical formula of Zn₁₋ₓAlₓO, wherein 0<x≤0.05; adding stabilizer to prepare solution using ethylene glycol monomethyl ether or alcohol-water solution as solvent; stirring in water bath in the temperature range of 40°C to 70°C for 4 to 8h to obtain uniform precursor solution; placing obtained precursor solution under the temperature ranged from 50°C to 80°C for a 56 to 90h ageing to obtain colloid of Zn₁₋ₓAlₓO.

Said stabilizer is one or more of monoethanolamine, diethanolamine and triethanolamine.

In said step 3, the ratio of total molar quantities of zinc and aluminum to total molar quantities of yttrium and europium or total molar quantities of yttrium and terbium is in the range of 0.01:1 to 2:1; and stirring in water bath under the temperature ranged from 15°C to 80°C for 1 to 4h to form said blended colloid.

In said step 4, spin-coating the blended colloid for 3 to 10 times during the coating, and drying the thin film under the temperature ranged from 100°C to 150°C for 5 to 30min after each spin-coating; placing the thin film formed by spin-coating into air atmosphere or reducing atmosphere, heating to 700°C to 1200°C at a speed of 1°C to 5°C/min, then keep the temperature constant for 1 to 3h.

Compared with the prior art, by introduction of conductive oxide Zn₁₋ₓAlₓO into the rare earth elements doping on yttrium oxide luminescent thin film of the present invention, the low conductivity of yttrium oxide luminescent thin film in the art is improved. As a result, the luminescent performance, purity and luminance of yttrium oxide luminescent thin film are increased, the thin film is of umiform thickness and good adhesion to substrate, which can be applied in lighting and display devices. Moreover, the preparation method of the present invention is simple and low cost.

### BRIEF DESCRIPTION OF THE DRAWINGS

Further description of the present invention will be illustrated, which combined with embodiments in the drawings:

FIG. 1 is a flow chart of the preparation methods of yttrium oxide luminescent thin film of the present invention;

FIG. 2 is a spectrum of luminescent thin film Y₂O₃:Eu adding Zn₁₋ₓAlₓO(AZO) of 100 nm thick prepared in Example 1 of the present invention, which is excited by cathode ray, with respect to the spectrum of luminescent thin film Y₂O₃:Eu without adding Zn₁₋ₓAlₓO(AZO) of 100 nm thick which is excited by cathode ray.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a rare earth elements doping on yttrium oxide luminescent thin film containing conductive oxides, said yttrium oxide luminescent thin film has the chemical composition formula of Y₂O₃: Re, Zn₁₋ₓAlₓO, wherein 0<x≤0.05, Re is rare earth element europium or terbium.

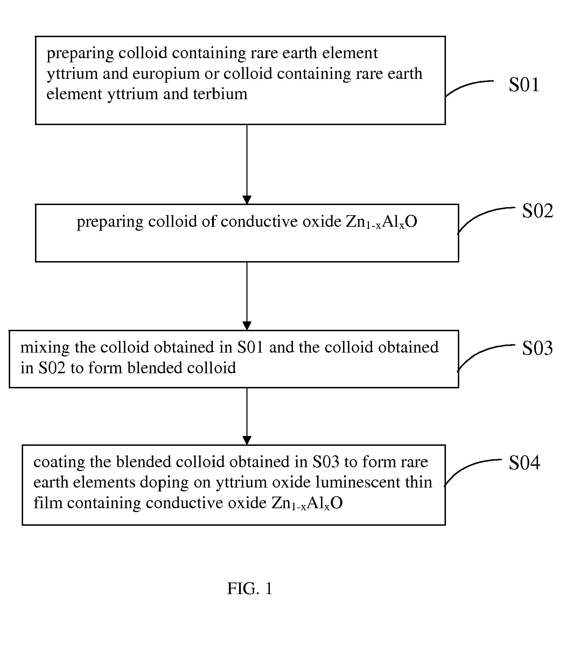

Referring to FIG. 1, it will be understood that FIG. 1 shows the process of the production method of rare earth elements doping on yttrium oxide luminescent thin film containing conductive oxides of the present invention, the production method comprises:

S01: preparing colloid containing rare earth element yttrium and europium or colloid containing rare earth element yttrium and terbium;

S02: preparing colloid of conductive oxide Zn₁₋ₓAlₓO;

S03: mixing the colloid obtained in S01 and the colloid obtained in S02 to form blended colloid;

S04: coating the blended colloid obtained in S03 to form rare earth elements doping on yttrium oxide luminescent thin film containing conductive oxide Zn₁₋ₓAlₓO.

In the preparation method of the present invention, in said S01, providing yttrium compound and europium compound to prepare solution of yttrium and europium doped with 0.1 % to 10% of europium, the concentration of the solution is in the range of 0.1mol/L to 2.00mol/L; then adding mixed solution of alcohol and water containing citric acid to prepare alcohol-water solution of yttrium and europium, where the volume ratio of water to ethanol is in the range of 1:1 to 1:7, the concentration of the alcohol-water solution is in the range of 0.1mol/L to 1.00mol/L; the molar ratio of citric acid to yttrium ions and europium ions is maintained in the range of 1:1 to 5: 1; then adding polyethylene glycol into alcohol-water solution, making the concentration of polyethylene glycol be in the range of 0.05 to 0.20mg/L; stirring the prepared alcohol-water solution of yttrium and europium in a water bath under the temperature ranged from 40°C to 60°C for 4 to 6h, then ageing in a oven under the temperature ranged from 60°C to 90°C for 40 to 60h to obtain colloid containing yttrium and europium; or
providing yttrium compound and terbium compound to prepare solution of yttrium and terbium doped with 0.1% to 10% of terbium, the concentration of the solution is in the range of 0.1mol/L to 2.00mol/L; then adding mixed solution of alcohol and water containing citric acid to prepare alcohol-water solution of yttrium and terbium where the volume ratio of water to ethanol is in the range of 1:1 to 1:7, the concentration of the alcohol-water solution is in the range of 0.1mol/L to 1.00mol/L; the molar ratio of citric acid to yttrium ions and terbium ions is maintained in the range of 1:1 to 5:1; then adding polyethylene glycol into alcohol-water solution, making the concentration of polyethylene glycol be in the range of 0.05 to 0.20mg/L; stirring the prepared alcohol-water solution of yttrium and terbium in a water bath under the temperature ranged from 40°C to 60°C for 4 to 6h, then ageing in a oven under the temperature ranged from 60°C to 90°C for 40 to 60h to obtain colloid containing yttrium and terbium. Said yttrium compound and europium compound or yttrium compound and terbium compound are selected from nitrates and soluble hydrochloride, and dissolved by deionized water in container to form solution. Said yttrium compound and europium compound or yttrium compound and terbium compound are selected from metal oxides and oxalates, stirring in the temperature range of 15°C to 100°C, said oxides or oxalates are dissolved by pure nitric acid in container to form solution.

In said step 3, the method of making conductive oxide Zn₁₋ₓAlₓD comprises: separately weighing zinc salt and aluminum salt according to the chemical formula of Zn₁₋ₓAlₓO, wherein 0<x≤0.05; adding stabilizer to prepare solution using ethylene glycol monomethyl ether or alcohol-water solution as solvent; stirring in water bath in the temperature range of 40°C to 70°C for 4 to 8h to obtain uniform precursor solution; placing obtained precursor solution under the temperature ranged from 50°C to 80°C for a 56 to 90h ageing to obtain colloid of Zn₁₋ₓAlₓO. Said stabilizer is one or more of monoethanolamine, diethanolamine and triethanolamine.

In said S03, the ratio of total molar quantities of zinc and aluminum to total molar quantities of yttrium and europium or total molar quantities of yttrium and terbium is in the range of 0.01:1 to 2:1; and stirring in water bath under the temperature ranged from 15°C to 80°C for 1 to 4h to form said blended colloid.

In said S04, spin-coating the blended colloid for 3 to 10 times during the coating, and drying the thin film under the temperature ranged from 100°C to 150°C for 5 to 30min after each spin-coating; placing the thin film formed by spin-coating into air atmosphere or reducing atmosphere, heating to 700°C to 1200°C at a speed of 1°C to 5°C/min, then keep the temperature constant for 1 to 3h. Said reducing atmosphere is selected from reducing atmosphere formed by carbon monoxide and mixed gases of nitrogen and hydrogen. The volume ration of said nitrogen to said hydrogen is 95:5.

The preparation method of the present invention is simple and low cost. By introduction of conductive oxide Zn₁₋ₓAlₓO into the rare earth elements doping on yttrium oxide luminescent thin film of the present invention, the low conductivity of yttrium oxide luminescent thin film in the art is improved. As a result, the luminescent performance, purity and luminance of yttrium oxide luminescent thin film are increased, the thin film is of umiform thickness and good adhesion to substrate, which can be applied in lighting and display devices.

Special examples are disclosed as follows to demonstrate production method of rare earth elements doping on yttrium oxide luminescent thin film containing conductive oxides of the present invention and other properties.

Example 1

At room temperature, 18.7675g of Y(NO₃)₃·6H₂O and 0.4461g of Eu(N0₃)₃·6H₂O were dissolved in deionized water to prepare 100mL of 0.5mol/L aqueous solution of yttrium and europium doped with 2% of europium. 8mL of 0.50mol/L aqueous solution of yttrium and europium were added into 32mL of anhydrous ethanol which were used as solvent. 7.6856g of citric acid and 2g of polyethylene glycol 8000 were added. Stirring in a 40°C water bath for 6h to obtain clarified precursor solution of yttrium and europium. Ageing the obtained precursor solution in a 90°C oven for 60h to form uniform colloid containing yttrium and europium.

At room temperature, 0.5460g of Zn(CH₃COO)₂·2H₂O, 0.0047g of Al(NO₃)₃·9H₂O and 0.4mL of C₆H₁₅O₃N were placed into a container, mixed solution of ethanol and water with volume ratio of 4:1 was added to adjust to 50mL. Stirring in a 40°C water bath for 5h to obtain uniform precursor solution. Ageing the obtained precursor solution in a 50°C oven for 90h to form uniform colloid of AZO.

Adding 0.4mL of the obtained colloid of AZO into colloid containing yttrium and europium, stirring in a 50°C water bath for 2h, then spin-coating the obtained colloid for 3 times, drying the thin film in a 150°C oven for 5min after each spin-coating. Placing the thin film formed by spin-coating into temperature-programmed furnace, heating to 700°C at a speed of 1°C/min, then maintained for 3h. Luminescent thin film Y₂O₃:Eu adding AZO of 100 nm thick was obtained.

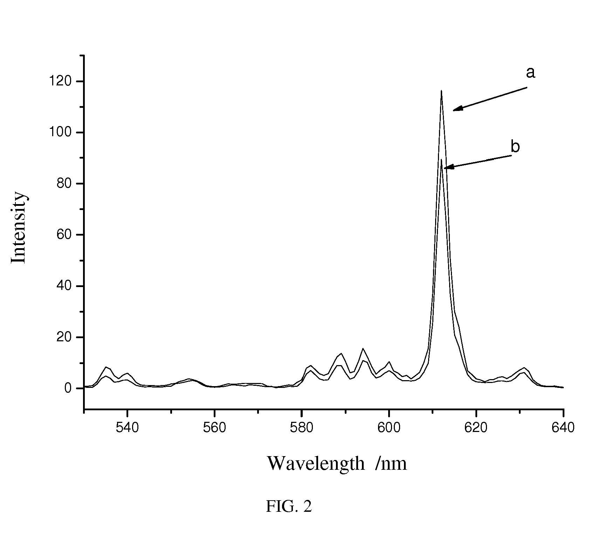

Referring to FIG. 2, curve a is a spectrum of luminescent thin film Y₂O₃:Eu adding AZO of 100 nm thick prepared in Example 1 of the present invention, which is excited by cathode ray; curve b is a spectrum of luminescent thin film Y₂O₃:Eu without adding AZO of 100 nm thick which is excited by cathode ray under the same experimental conditions. Herein, the integral area of curve a is 1.44 times as large as that of curve b. The spectrum is analyzed on Shimadzu RF-5301PC fluorospectro photometer under the testing voltage of 5Kv.

Example 2

At room temperature, 37.9180g of Y(NO₃)₃·6H₂O and 0.4441g of Eu(NO₃)₃·6H₂O were dissolved in deionized water to prepare 100mL of 1mol/L aqueous solution of yttrium and europium doped with 1% of europium. 4mL of 1mol/L aqueous solution of yttrium and europium were added into 1mL of deionized water and 35mL of anhydrous ethanol which were used as solvent. 3.0742g of citric acid and 5g of polyethylene glycol 10000 were added. Stirring in a 60°C water bath for 4h to obtain clarified precursor solution of yttrium and europium. Ageing the obtained precursor solution in a 90°C oven for 40h to form uniform colloid containing yttrium and europium.

At room temperature, 2.1292g of Zn(CH₃COO)₂·2H₂O, 0.1125g of Al(NO₃)₃·9H₂O and 0.6mL of C₂H₇NO were placed into a container, ethylene glycol monomethyl ether was added to adjust to 50mL. Stirring in a 60°C water bath for 4h to obtain clarified precursor solution. Ageing the obtained precursor solution in a 60°C oven for 70h to form uniform colloid of AZO.

Adding 1mL of the obtained colloid of AZO into colloid containing yttrium and europium, stirring in a 15°C water bath for 2h, then spin-coating the obtained colloid for 6 times, drying the thin film in a 120°C oven for 15min after each spin-coating. Placing the thin film formed by spin-coating into temperature-programmed furnace, heating to 1000°C at a speed of 3°C/min, then keep the temperature constant for 3h. Luminescent thin film Y₂O₃:Eu adding AZO of 1 µm thick was obtained.

Example 3

At room temperature, 76.5254g of Y(NO₃)₃·6H₂O and 0.0892g of Eu(NO₃)₃·6H₂O were dissolved in deionized water to prepare 100mL of 2mol/L aqueous solution of yttrium and europium doped with 0.1 % of europium. 20mL of 2.00mol/L aqueous solution of yttrium and europium were added into 20mL of anhydrous ethanol which were used as solvent. 7.6856g of citric acid and 8g of polyethylene glycol 10000 were added. Stirring in a 50°C water bath for 6h to obtain clarified precursor solution of yttrium and europium. Ageing the obtained precursor solution in a 60°C oven for 60h to form uniform colloid containing yttrium and europium.

At room temperature, 2.4810g of ZnCl₂·2H₂O, 0.1448g of AlCl₃·6H₂O and 1.5mL of C₄H₁₁NO₂ were placed into a container, mixed solution of ethanol and water with volume ratio of 3:1 was added to adjust to 50mL. Stirring in a 70°C water bath for 8h to obtain uniform precursor solution. Ageing the obtained precursor solution in a 80°C oven for 70h to form uniform colloid of AZO.

Adding 6.7mL of the obtained colloid of AZO into colloid containing yttrium and europium, stirring in a 80°C water bath for 4h, then spin-coating the obtained colloid for 6 times, drying the thin film in a 100°C oven for 30min after each spin-coating. Placing the thin film formed by spin-coating into temperature-programmed furnace, heating to 1200°C at a speed of 5°C/min, then keep the temperature constant for 2h. Luminescent thin film Y₂O₃:Eu adding AZO of 1 µm thick was obtained.

Example 4

At room temperature, 37.9180g of Y(NO₃)₃·6H₂O and 0.4441g of Eu(NO₃)₃·6H₂O were dissolved in deionized water to prepare 100mL of 1mol/L aqueous solution of yttrium and europium doped with 1% of europium. 20mL of 1.00mol/L aqueous solution of yttrium and europium were added into 20mL of anhydrous ethanol which were used as solvent. 15.3712g of citric acid and 5g of polyethylene glycol 20000 were added. Stirring in a 60°C water bath for 4h to obtain clarified precursor solution of yttrium and europium. Ageing the obtained precursor solution in a 80°C oven for 56h to form uniform colloid containing yttrium and europium.

At room temperature, 1.0865g of Zn(CH₃COO)₂·2H₂O, 0.0188g of Al(NO₃)₃·9H₂O and 0.4mL of C₂H₇NO were placed into a container, mixed solution of ethanol and water in volume ratio of 5:1 was added to adjust to 50mL. Stirring in a 50°C water bath for 6h to obtain uniform precursor solution. Ageing the obtained precursor solution in a 60°C oven for 80h to form uniform colloid of AZO.

Adding 1mL of the obtained colloid of AZO into colloid containing yttrium and europium, stirring in a 60°C water bath for 2h, then spin-coating the obtained colloid for 10 times, drying the thin film in a 120°C oven for 15min after each spin-coating. Placing the thin film formed by spin-coating into temperature-programmed furnace, heating to 1200°C at a speed of 4°C/min, then keep the temperature constant for 1h. Luminescent thin film Y₂O₃:Eu adding AZO of 2 µm thick was obtained.

Example 5

At room temperature, 28.6899g of yttrium oxalate and 1.7201g of europium oxalate were dissolved and stirred in 20mL of nitric acid at 15°C, then deionized water was added to adjust to 50mL, preparing 100mL of 1mol/L aqueous solution of yttrium and europium doped with 5% of europium. 20mL of 1.00mol/L aqueous solution of yttrium and europium were added into 20mL of anhydrous ethanol which were used as solvent. 7.6858g of citric acid and 5g of polyethylene glycol 10000 were added. Stirring in a 60°C water bath for 4h to obtain clarified precursor solution of yttrium and europium. Ageing the obtained precursor solution in a 60°C oven for 60h to form uniform colloid containing yttrium and europium.

At room temperature, 2.9452g of Zn(NO₃)₂·6H₂O, 0.0241g of AlCl₃·6H₂O and 0.6mL of C₂H₇NO were placed into a container, ethylene glycol monomethyl ether was added to adjust to 50mL. Stirring in a 60°C water bath for 7h to obtain uniform precursor solution. Ageing the obtained precursor solution in a 60°C oven for 56h to form uniform colloid of AZO.

Adding 5mL of the obtained colloid of AZO into colloid containing yttrium and europium, stirring in a 80°C water bath for 2h, then spin-coating the obtained colloid for 6 times, drying the thin film in a 100°C oven for 20min after each spin-coating. Placing the thin film formed by spin-coating into temperature-programmed furnace, heating to 1000°C at a speed of 3°C/min, then keep the temperature constant for 2h. Luminescent thin film Y₂O₃:Eu adding AZO of 1 µm thick was obtained.

Example 6

At room temperature, 10.7260g of Y₂O₃ and 0.8798g of Eu₂O₃ were dissolved and stirred in 27mL of hydrochloric acid at 60°C, then deionized water was added to adjust to 100mL, preparing 100mL of 1mol/L aqueous solution of yttrium and europium doped with 5% of europium. 8mL of 1.00mol/L aqueous solution of yttrium and europium were added into 32mL of anhydrous ethanol which were used as solvent. 6.1485g of citric acid and 5g of polyethylene glycol 6000 were added. Stirring in a 60°C water bath for 4h to obtain clarified precursor solution of yttrium and europium. Ageing the obtained precursor solution in a 70°C oven for 60h to form uniform colloid containing yttrium and europium.

At room temperature, 3.1937g of Zn(CH₃COO)₂·2H₂O, 0.1688g of Al(NO₃)₃·9H₂O and 0.9mL of C₂H₇NO were placed into a container, ethylene glycol monomethyl ether was added to adjust to 50mL. Stirring in a 60°C water bath for 8h to obtain clarified precursor solution. Ageing the obtained precursor solution in a 60°C oven for 65h to form uniform colloid of AZO.

Adding 26mL of the obtained colloid of AZO into colloid containing yttrium and europium, stirring in a 80°C water bath for 2h, then spin-coating the obtained colloid for 10 times, drying the thin film in a 120°C oven for 15min after each spin-coating. Placing the thin film formed by spin-coating into temperature-programmed furnace, heating to 1000°C at a speed of 5°C/min, then keep the temperature constant for 2h. Luminescent thin film Y₂O₃:Eu adding AZO of 2 µm thick was obtained.

Example 7

At room temperature, 37.5350g of Y(NO₃)₃·6H₂O and 0.9061g of Tb(NO₃)₃·6H₂O were dissolved in deionized water to prepare 100mL of 1mol/L aqueous solution of yttrium and terbium doped with 2% of terbium. 12mL of 1.00mol/L aqueous solution of yttrium and terbium were added into 28mL of anhydrous ethanol which were used as solvent. 9.2227g of citric acid and 5g of polyethylene glycol 10000 were added. Stirring in a 60°C water bath for 4h to obtain clarified precursor solution of yttrium and terbium. Ageing the obtained precursor solution in a 90°C oven for 56h to form uniform colloid containing yttrium and terbium.

At room temperature, 4.2583g of Zn(CH₃COO)₂·2H₂O, 0.2251g of Al(NO₃)₃·9H₂O and 2mL of C₄H₁₁NO₂ were placed into a container, ethylene glycol monomethyl ether was added to adjust to 50mL. Stirring in a 60°C water bath for 4h to obtain uniform precursor solution. Ageing the obtained precursor solution in a 60°C oven for 78h to form uniform colloid of AZO.

Adding 15mL of the obtained colloid of AZO into colloid containing yttrium and terbium, stirring in a 60°C water bath for 2h, then spin-coating the obtained colloid for 4 times, drying the thin film in a 120°C oven for 15min after each spin-coating. Placing the thin film formed by spin-coating into muffle furnace, heating to 1000°C at a speed of 5°C/min in reducing atmosphere formed by carbon monoxide, then keep the temperature constant for 3h. Luminescent thin film Y₂O₃:Tb adding AZO of 800 nm thick was obtained.

Example 8

At room temperature, 31.1728g of YCl₃ and 1.1198g of TbCl₃·6H₂O were dissolved in deionized water to prepare 100mL of 1mol/L aqueous solution of yttrium and terbium doped with 3% of terbium. 4mL of 1.00mol/L aqueous solution of yttrium and terbium were added into 36mL of anhydrous ethanol which were used as solvent. 6.2125g of citric acid and 5g of polyethylene glycol 10000 were added. Stirring in a 60°C water bath for 5h to obtain clarified precursor solution of yttrium and terbium. Ageing the obtained precursor solution in a 60°C oven for 60h to form uniform colloid containing yttrium and terbium.

At room temperature, 7.2984g of Zn(CH₃COO)₂·2H₂O, 0.6565g of Al(NO₃)₃·9H₂O and 6mL of C₂H₇NO were placed into a container, mixed solution of ethanol and water with volume ratio of 6:1 was added to adjust to 50mL. Stirring in a 70°C water bath for 5h to obtain uniform 0.70mol/L precursor solution. Ageing the obtained precursor solution in a 60°C oven for 85h to form uniform colloid of AZO.

Adding 4mL of the obtained colloid of AZO into colloid containing yttrium and terbium, stirring in a 70°C water bath for 4h, then spin-coating the obtained colloid for 8 times, drying the thin film in a 120°C oven for 20min after each spin-coating. Placing the thin film formed by spin-coating into muffle furnace, heating to 1000°C at a speed of 5°C/min in reducing atmosphere formed by mixed gases of H₂ and N₂, then keep the temperature constant for 2h. Luminescent thin film Y₂O₃:Tb adding AZO of 1.5 µm thick was obtained.

Example 9

At room temperature, 27.1780g of yttrium oxalate and 3.5099g of terbium oxalate were dissolved and stirred in 20mL of nitric acid at 15°C, then deionized water was added to adjust to 100mL, preparing 100mL of 1mol/L aqueous solution of yttrium and terbium doped with 10% of terbium. 10mL of 1.00mol/L aqueous solution of yttrium and terbium were added into 30mL of anhydrous ethanol which were used as solvent. 7.6858g of citric acid and 5g of polyethylene glycol 10000 were added. Stirring in a 60°C water bath for 4h to obtain clarified precursor solution of yttrium and terbium. Ageing the obtained precursor solution in a 80°C oven for 50h to form uniform colloid containing yttrium and terbium.

At room temperature, 6.9733g of ZnSO₄·7H₂O, 0.1283g of Al₂(SO₄)₃ and 1.5mL of C₂H₇NO were placed into a container, mixed solution of ethanol and water with volume ratio of 7:1 was added to adjust to 50mL. Stirring in a 60°C water bath for 5h to obtain uniform precursor solution. Ageing the obtained precursor solution in a 60°C oven for 90h to form uniform colloid of AZO.

Adding 10mL of the obtained colloid of AZO into colloid containing yttrium and terbium, stirring in a 60°C water bath for 2h, then spin-coating the obtained colloid for 6 times, drying the thin film in a 120°C oven for 15min after each spin-coating. Placing the thin film formed by spin-coating into muffle furnace, heating to 1000°C at a speed of 3°C/min in reducing atmosphere formed by mixed gases of H₂ and N₂, then keep the temperature constant for 3h. Luminescent thin film Y₂O₃:Tb adding AZO of 1 µm thick was obtained.

Example 10

At room temperature, 11.0647g of Y₂O₃ and 0.3739g of Tb₄O₇ were dissolved and stirred in 27mL of hydrochloric acid at 100°C, then water was added to adjust to 100mL, preparing 100mL of 1mol/L aqueous solution of yttrium and terbium doped with 2% of terbium. 15mL of 1.00mol/L aqueous solution of yttrium and terbium were added into 25mL of anhydrous ethanol which were used as solvent. 5.7642g of citric acid and 5g of polyethylene glycol 10000 were added. Stirring in a 50°C water bath for 5h to obtain clarified precursor solution of yttrium and terbium. Ageing the obtained precursor solution in a 90°C oven for 60h to form uniform colloid containing yttrium and terbium.

At room temperature, 9.6620g of ZnSO₄·7H₂O, 0.2395g of Al₂(SO₄)₃ and 4.7mL of C₆H₁₅O₃N were placed into a container, ethylene glycol monomethyl ether was added to adjust to 50mL. Stirring in a 60°C water bath for 5h to obtain uniform precursor solution. Ageing the obtained precursor solution in a 60°C oven for 60h to form uniform colloid of AZO.

Adding 10mL of the obtained colloid of AZO into colloid containing yttrium and terbium, stirring in a 60°C water bath for 2h, then spin-coating the obtained colloid for 8 times, drying the thin film in a 120°C oven for 15min after each spin-coating. Placing the thin film formed by spin-coating into muffle furnace, heating to 1200°C at a speed of 3°C/min in reducing atmosphere formed by mixed gases of H₂ and N₂, then keep the temperature constant for 1h. Luminescent thin film Y₂O₃:Tb adding AZO of 1.5 µm thick was obtained.

Example 11

At room temperature, 37.9180g of Y(NO₃)₃·6H₂O and 0.4441g of Eu(NO₃)₃·6H₂O were dissolved in deionized water to prepare 100mL of 1mol/L aqueous solution of yttrium and europium doped with 1% of europium. 4mL of 1mol/L aqueous solution of yttrium and europium were added into 1mL of deionized water and 35mL of anhydrous ethanol which were used as solvent. 3.0742g of citric acid and 5g of polyethylene glycol 10000 were added. Stirring in a 60°C water bath for 4h to obtain clarified precursor solution of yttrium and europium. Ageing the obtained precursor solution in a 90°C oven for 40h to form uniform colloid containing yttrium and europium.

At room temperature, 2.1292g of Zn(CH₃COO)₂·2H₂O, 0.1125g of Al(NO₃)₃·9H₂O and 0.6mL of C₂H₇NO were placed into a container, ethylene glycol monomethyl ether was added to adjust to 50mL. Stirring in a 60°C water bath for 4h to obtain clarified precursor solution. Ageing the obtained precursor solution in a 60°C oven for 70h to form uniform colloid of AZO.

Adding 1mL of the obtained colloid of AZO into colloid containing yttrium and europium, stirring in a 60°C water bath for 2h, then spin-coating the obtained colloid for 4 times, drying the thin film in a 120°C oven for 15min after each spin-coating. Placing the thin film formed by spin-coating into temperature-programmed furnace, heating to 1000°C at a speed of 5°C/min, then keep the temperature constant for 1h. Luminescent thin film Y₂O₃:Eu adding AZO of 800 nm thick was obtained.

Example 12

At room temperature, 76.5254g of Y(NO₃)₃·6H₂O and 0.0892g of Eu(NO₃)₃·6H₂O were dissolved in deionized water to prepare 100mL of 2mol/L aqueous solution of yttrium and europium doped with 0.1 % of europium. 20mL of 2.00mol/L aqueous solution of yttrium and europium were added into 20mL of anhydrous ethanol which were used as solvent. 7.6856g of citric acid and 8g of polyethylene glycol 10000 were added. Stirring in a 50°C water bath for 6h to obtain clarified precursor solution of yttrium and europium. Ageing the obtained precursor solution in a 60°C oven for 60h to form uniform colloid containing yttrium and europium.

At room temperature, 2.4810g of ZnCl₂·2H₂O, 0.1448g of AlCl₃·6H₂O and 1.5mL of C₄H₁₁NO₂ were placed into a container, mixed solution of ethanol and water with volume ratio of 3:1 was added to adjust to 50mL. Stirring in a 70°C water bath for 8h to obtain uniform precursor solution. Ageing the obtained precursor solution in a 80°C oven for 70h to form uniform colloid of AZO.

Adding 6.7mL of the obtained colloid of AZO into colloid containing yttrium and europium, stirring in a 60°C water bath for 2h, then spin-coating the obtained colloid for 8 times, drying the thin film in a 120°C oven for 15min after each spin-coating. Placing the thin film formed by spin-coating into temperature-programmed furnace, heating to 1200°C at a speed of 3°C/min, then keep the temperature constant for 1h. Luminescent thin film Y₂O₃:Eu adding AZO of 1.5 µm thick was obtained.

Example 13

At room temperature, 18.7675g of Y(NO₃)₃·6H₂O and 0.4461g of Eu(NO₃)₃·6H₂O were dissolved in deionized water to prepare 100mL of 0.5mol/L aqueous solution of yttrium and europium doped with 2% of europium. 8mL of 0.5mol/L aqueous solution of yttrium and europium were added into 32mL of anhydrous ethanol which were used as solvent. 7.6856g of citric acid and 2g of polyethylene glycol 10000 were added. Stirring in a 40°C water bath for 6h to obtain clarified precursor solution of yttrium and europium. Ageing the obtained precursor solution in a 90°C oven for 60h to form uniform colloid containing yttrium and europium.

At room temperature, 0.5460g of Zn(CH₃COO)₂·2H₂O, 0.0047g of Al(NO₃)_{3·}9H₂O and 0.4mL of C₆H₁₅O₃N were placed into a container, mixed solution of ethanol and water with volume ratio of 4:1 was added to adjust to 50mL. Stirring in a 40°C water bath for 5h to obtain uniform precursor solution. Ageing the obtained precursor solution in a 50°C oven for 90h to form uniform colloid of AZO.

Adding 0.4mL of the obtained colloid of AZO into colloid containing yttrium and europium, stirring in a 60°C water bath for 2h, then spin-coating the obtained colloid for 6 times, drying the thin film in a 120°C oven for 15min after each spin-coating. Placing the thin film formed by spin-coating into temperature-programmed furnace, heating to 1000°C at a speed of 3°C/min, then keep the temperature constant for 3h. Luminescent thin film Y₂O₃:Eu adding AZO of 1 µm thick was obtained.

Example 14

At room temperature, 37.9180g of Y(NO₃)₃·6H₂O and 0.4441g of Eu(NO₃)₃·6H₂O were dissolved in deionized water to prepare 100mL of 1mol/L aqueous solution of yttrium and europium doped with 1% of europium. 20mL of 1.00mol/L aqueous solution of yttrium and europium were added into 20mL of anhydrous ethanol which were used as solvent. 15.3712g of citric acid and 5g of polyethylene glycol 10000 were added. Stirring in a 60°C water bath for 4h to obtain clarified precursor solution of yttrium and europium. Ageing the obtained precursor solution in a 80°C oven for 56h to form uniform colloid containing yttrium and europium.

At room temperature, 1.0865g of Zn(CH₃COO)₂·2H₂O, 0.0188g of Al(NO₃)₃·9H₂O and 0.4mL of C₂H₇NO were placed into a container, mixed solution of ethanol and water with volume ratio of 5:1 was added to adjust to 50mL. Stirring in a 50°C water bath for 6h to obtain uniform precursor solution. Ageing the obtained precursor solution in a 60°C oven for 80h to form uniform colloid of AZO.

Adding 1mL of the obtained colloid of AZO into colloid containing yttrium and europium, stirring in a 60°C water bath for 2h, then spin-coating the obtained colloid for 8 times, drying the thin film in a 120°C oven for 20min after each spin-coating. Placing the thin film formed by spin-coating into temperature-programmed furnace, heating to 1000°C at a speed of 5°C/min, then keep the temperature constant for 2h. Luminescent thin film Y₂O₃:Eu adding AZO of 1.5 µm thick was obtained.

Example 15

At room temperature, 28.6899g of yttrium oxalate and 1.7201g of europium oxalate were dissolved and stirred in 20mL of nitric acid at 15°C, then deionized water was added to adjust to 100mL, preparing 100mL of 1mol/L aqueous solution of yttrium and europium doped with 5% of europium. 20mL of 1.00mol/L aqueous solution of yttrium and europium were added into 20mL of anhydrous ethanol which were used as solvent. 7.6858g of citric acid and 5g of polyethylene glycol 10000 were added. Stirring in a 60°C water bath for 4h to obtain clarified precursor solution of yttrium and europium. Ageing the obtained precursor solution in a 60°C oven for 60h to form uniform colloid containing yttrium and europium.

At room temperature, 2.9452g of Zn(NO₃)₂·6H₂O, 0.0241g of AlCl₃·6H₂O and 0.6mL of C₂H₇NO were placed into a container, ethylene glycol monomethyl ether was added to adjust to 50mL. Stirring in a 60°C water bath for 7h to obtain uniform precursor solution. Ageing the obtained precursor solution in a 60°C oven for 56h to form uniform colloid of AZO.

Adding 5mL of the obtained colloid of AZO into colloid containing yttrium and europium, stirring in a 65°C water bath for 2h, then spin-coating the obtained colloid for 4 times, drying the thin film in a 120°C oven for 15min after each spin-coating. Placing the thin film formed by spin-coating into temperature-programmed furnace, heating to 1000°C at a speed of 4°C/min, then keep the temperature constant for 3h. Luminescent thin film Y₂O₃:Eu adding AZO of 800 nm thick was obtained.

Example 16

At room temperature, 10.7260g of Y₂O₃ and 0.8798g of Eu₂O₃ were dissolved and stirred in 27mL of hydrochloric acid at 60°C, then deionized water was added to adjust to 100mL, preparing 100mL of 1mol/L aqueous solution of yttrium and europium doped with 5% of europium. 8mL of 1.00mol/L aqueous solution of yttrium and europium were added into 32mL of anhydrous ethanol which were used as solvent. 6.1485g of citric acid and 5g of polyethylene glycol 10000 were added. Stirring in a 60°C water bath for 4h to obtain clarified precursor solution of yttrium and europium. Ageing the obtained precursor solution in a 70°C oven for 60h to form uniform colloid containing yttrium and europium.

At room temperature, 3.1937g of Zn(CH₃COO)₂·2H₂O, 0.1688g of Al(NO₃)₃·9H₂O and 0.9mL of C₂H₇NO were placed into a container, ethylene glycol monomethyl ether was added to adjust to 50mL. Stirring in a 60°C water bath for 8h to obtain clarified precursor solution. Ageing the obtained precursor solution in a 60°C oven for 65h to form uniform colloid of AZO.

Adding 26mL of the obtained colloid of AZO into colloid containing yttrium and europium, stirring in a 75°C water bath for 2h, then spin-coating the obtained colloid for 10 times, drying the thin film in a 120°C oven for 15min after each spin-coating. Placing the thin film formed by spin-coating into temperature-programmed furnace, heating to 1000°C at a speed of 5°C/min, then keep the temperature constant for 2h. Luminescent thin film Y₂O₃:Eu adding AZO of 2 µm thick was obtained.

Example 17

At room temperature, 37.5350g of Y(NO₃)₃·6H₂O and 0.9061g of Tb(NO₃)₃·6H₂O were dissolved in deionized water to prepare 100mL of 1mol/L aqueous solution of yttrium and terbium doped with 2% of terbium. 12mL of 1.00mol/L aqueous solution of yttrium and terbium were added into 28mL of anhydrous ethanol which were used as solvent. 9.2227g of citric acid and 5g of polyethylene glycol 10000 were added. Stirring in a 60°C water bath for 4h to obtain clarified precursor solution of yttrium and terbium. Ageing the obtained precursor solution in a 90°C oven for 56h to form uniform colloid containing yttrium and terbium.

At room temperature, 4.2583g of Zn(CH₃COO)₂·2H₂O, 0.2251g of Al(NO₃)₃·9H₂O and 2mL of C₄H₁₁NO₂ were placed into a container, ethylene glycol monomethyl ether was added to adjust to 50mL. Stirring in a 60°C water bath for 4h to obtain uniform precursor solution. Ageing the obtained precursor solution in a 60°C oven for 78h to form uniform colloid of AZO.

Adding 15mL of the obtained colloid of AZO into colloid containing yttrium and terbium, stirring in a 55°C water bath for 2.5h, then spin-coating the obtained colloid for 6 times, drying the thin film in a 100°C oven for 20min after each spin-coating. Placing the thin film formed by spin-coating into muffle furnace, heating to 1000°C at a speed of 3°C/min in reducing atmosphere formed by carbon monoxide, then keep the temperature constant for 2h. Luminescent thin film Y₂O₃:Tb adding AZO of 1 µm thick was obtained.

Example 18

At room temperature, 31.1728g of YCl₃ and 1.1198g of TbCl₃·6H₂O were dissolved in deionized water to prepare 100mL of 1mol/L aqueous solution of yttrium and terbium doped with 3% of terbium. 4mL of 1.00mol/L aqueous solution of yttrium and terbium were added into 36mL of anhydrous ethanol which were used as solvent. 6.2125g of citric acid and 5g of polyethylene glycol 10000 were added. Stirring in a 60°C water bath for 5h to obtain clarified precursor solution of yttrium and terbium. Ageing the obtained precursor solution in a 60°C oven for 60h to form uniform colloid containing yttrium and terbium.

At room temperature, 7.2984g of Zn(CH₃COO)₂·2H₂O, 0.6565g of Al(NO₃)₃·9H₂O and 6mL of C₂H₇NO were placed into a container, mixed solution of ethanol and water with volume ratio of 6:1 was added to adjust to 50mL. Stirring in a 70°C water bath for 5h to obtain uniform precursor solution. Ageing the obtained precursor solution in a 60°C oven for 85h to form uniform colloid of AZO.

Adding 4mL of the obtained colloid of AZO into colloid containing yttrium and terbium, stirring in a 75°C water bath for 3.5h, then spin-coating the obtained colloid for 10 times, drying the thin film in a 120°C oven for 15min after each spin-coating. Placing the thin film formed by spin-coating into muffle furnace, heating to 1200°C at a speed of 4°C/min in reducing atmosphere formed by carbon monoxide, then keep the temperature constant for 1h. Luminescent thin film Y₂O₃:Tb adding AZO of 2 µm thick was obtained.

Example 19

At room temperature, 27.1780g of yttrium oxalate and 3.5099g of terbium oxalate were dissolved and stirred in 20mL of nitric acid at 15°C, then deionized water was added to adjust to 100mL, preparing 100mL of 1mol/L aqueous solution of yttrium and terbium doped with 10% of terbium. 10mL of 1.00mol/L aqueous solution of yttrium and terbium were added into 30mL of anhydrous ethanol which were used as solvent. 7.6858g of citric acid and 5g of polyethylene glycol 6000 were added. Stirring in a 60°C water bath for 4h to obtain clarified precursor solution of yttrium and terbium. Ageing the obtained precursor solution in a 80°C oven for 50h to form uniform colloid containing yttrium and terbium.

At room temperature, 6.9733g of ZnSO₄·7H₂O, 0.1283g of Al₂(SO₄)₃ and 1.5mL of C₂H₇NO were placed into a container, mixed solution of ethanol and water with volume ratio of 7:1 was added to adjust to 50mL. Stirring in a 60°C water bath for 5h to obtain uniform precursor solution. Ageing the obtained precursor solution in a 60°C oven for 90h to form uniform colloid of AZO.

Adding 10mL of the obtained colloid of AZO into colloid containing yttrium and terbium, stirring in a 80°C water bath for 1h, then spin-coating the obtained colloid for 3 times, drying the thin film in a 150°C oven for 5min after each spin-coating. Placing the thin film formed by spin-coating into muffle furnace, heating to 700°C at a speed of 1°C/min in reducing atmosphere formed by mixed gases of H₂ and N₂, then keep the temperature constant for 3h. Luminescent thin film Y₂O₃:Tb adding AZO of 100 nm thick was obtained.

Example 20

At room temperature, 11.0647g of Y₂O₃ and 0.3739g of Tb₄O₇ were dissolved and stirred in 27mL of hydrochloric acid at 100°C, then water was added to adjust to 100mL, preparing 100mL of 1mol/L aqueous solution of yttrium and terbium doped with 2% of terbium. 15mL of 1.00mol/L aqueous solution of yttrium and terbium were added into 25mL of anhydrous ethanol which were used as solvent. 5.7642g of citric acid and 5g of polyethylene glycol 10000 were added. Stirring in a 50°C water bath for 5h to obtain clarified precursor solution of yttrium and terbium. Ageing the obtained precursor solution in a 90°C oven for 60h to form uniform colloid containing yttrium and terbium.

At room temperature, 9.6620g of ZnSO₄·7H₂O, 0.2395g of Al₂(SO₄)₃ and 4.7mL of C₆H₁₅O₃N were placed into a container, ethylene glycol monomethyl ether was added to adjust to 50mL. Stirring in a 60°C water bath for 5h to obtain uniform precursor solution. Ageing the obtained precursor solution in a 60°C oven for 60h to form uniform colloid of AZO.

Adding 10mL of the obtained colloid of AZO into colloid containing yttrium and terbium, stirring in a 50°C water bath for 2h, then spin-coating the obtained colloid for 6 times, drying the thin film in a 100°C oven for 30min after each spin-coating. Placing the thin film formed by spin-coating into muffle furnace, heating to 1200°C at a speed of 5°C/min in reducing atmosphere formed by mixed gases of H₂ and N₂, then keep the temperature constant for 2h. Luminescent thin film Y₂O₃:Tb adding AZO of 1 µm thick was obtained.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. A rare earth elements doping on yttrium oxide luminescent thin film containing conductive oxides, wherein said yttrium oxide luminescent thin film has the chemical composition formula of Y₂O₃: Re, Zn₁₋ₓAlₓO, wherein 0<x≤0.05, Re is rare earth element europium or terbium.

2. A preparation method of rare earth elements doping on yttrium oxide luminescent thin film containing conductive oxides, comprising:
step 1: preparing colloid containing rare earth element yttrium and europium or colloid containing rare earth element yttrium and terbium;
step 2: preparing colloid of conductive oxide Zn₁₋ₓAlₓO;
step 3: mixing the colloid obtained in step 1 and the colloid obtained in step 2 to form blended colloid;
step 4: coating the blended colloid obtained in step 3 to form rare earth elements doping on yttrium oxide luminescent thin film containing conductive oxide Zn₁₋ₓAlₓO.

3. The preparation method as in claim 2, wherein in said step 1, providing yttrium compound and europium compound to prepare solution of yttrium and europium doped with 0.1% to 10% of europium, the concentration of the solution is in the range of 0.1mol/L to 2.00mol/L; then adding mixed solution of alcohol and water containing citric acid to prepare alcohol-water solution of yttrium and europium, where the volume ratio of water to ethanol is in the range of 1:1 to 1:7, the concentration of the alcohol-water solution is in the range of 0.1mol/L to 1.00mol/L; the molar ratio of citric acid to yttrium ions and europium ions is maintained in the range of 1:1 to 5:1; then adding polyethylene glycol into alcohol-water solution, making the concentration of polyethylene glycol be in the range of 0.05 to 0.20mg/L; stirring the prepared alcohol-water solution of yttrium and europium in a water bath under the temperature ranged from 40°C to 60°C for 4 to 6h, then ageing in a oven under the temperature ranged from 60°C to 90°C for 40 to 60h to obtain colloid containing yttrium and europium; or
providing yttrium compound and terbium compound to prepare solution of yttrium and terbium doped with 0.1% to 10% of terbium, the concentration of the solution is in the range of 0.1mol/L to 2.00mol/L; then adding mixed solution of alcohol and water containing citric acid to prepare alcohol-water solution of yttrium and terbium where the volume ratio of water to ethanol is in the range of 1:1 to 1:7, the concentration of the alcohol-water solution is in the range of 0.1mol/L to 1.00mol/L; the molar ratio of citric acid to yttrium ions and terbium ions is maintained in the range of 1:1 to 5:1; then adding polyethylene glycol into alcohol-water solution, making the concentration of polyethylene glycol be in the range of 0.05 to 0.20mg/L; stirring the prepared alcohol-water solution of yttrium and terbium in a water bath under the temperature ranged from 40°C to 60°C for 4 to 6h, then ageing in a oven under the temperature ranged from 60°C to 90°C for 40 to 60h to obtain colloid containing yttrium and terbium.

4. The preparation method as in claim 3, wherein said yttrium compound and europium compound or yttrium compound and terbium compound are selected from nitrates and soluble hydrochloride, and dissolved by deionized water in container to form solution.

5. The preparation method as in claim 3, wherein said yttrium compound and europium compound or yttrium compound and terbium compound are selected from metal oxides and oxalates, stirring in the temperature range of 15°C to 100°C, said oxides or oxalates are dissolved by pure nitric acid in container to form solution.

6. The preparation method as in claim 2, wherein in said step 2, the method of making conductive oxide Zn₁₋ₓAlₓO comprises: separately weighing zinc salt and aluminum salt according to the chemical formula of Zn₁₋ₓAlₓO, wherein 0 < x≤0.05; adding stabilizer to prepare solution using ethylene glycol monomethyl ether or alcohol-water solution as solvent; stirring in water bath in the temperature range of 40°C to 70°C for 4 to 8h to obtain uniform precursor solution; placing obtained precursor solution under the temperature ranged from 50°C to 80°C for a 56 to 90h ageing to obtain colloid of Zn₁₋ₓAlₓO.

7. The preparation method as in claim 6, wherein said stabilizer is one or more of monoethanolamine, diethanolamine and triethanolamine.

8. The preparation method as in claim 2, wherein in said step 3, the ratio of total molar quantities of zinc and aluminum to total molar quantities of yttrium and europium or total molar quantities of yttrium and terbium is in the range of 0.01:1 to 2:1; and stirring in water bath under the temperature ranged from 15°C to 80°C for 1 to 4h to form said blended colloid.

9. The preparation method as in claim 2, wherein in said step 4, spin-coating the blended colloid for 3 to 10 times during the coating, and drying the thin film under the temperature ranged from 100°C to 150°C for 5 to 30min after each spin-coating; placing the thin film formed by spin-coating into air atmosphere or reducing atmosphere, heating to 700°C to 1200°C at a speed of 1°C to 5°C/min, then keep the temperature constant for 1 to 3h.

10. The preparation method as in claim 9, wherein said reducing atmosphere is selected from reducing atmosphere formed by carbon monoxide and mixed gases of nitrogen and hydrogen.
